(19) Europäisches Patentamt
European Patent Office
Office européen des brevets

(11) **EP 2 458 309 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(51) Int Cl.:
***F25D 25/00*** *(2006.01)*

(21) Anmeldenummer: **11009209.5**

(22) Anmeldetag: **21.11.2011**

(54) **Lagerkassette für Laborobjekte**

Storage cartridge for laboratory objects

Caisson de stockage pour objets de laboratoire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2010 CH 19682010**

(43) Veröffentlichungstag der Anmeldung:
**30.05.2012 Patentblatt 2012/22**

(73) Patentinhaber: **LICONIC AG**
**9493 Mauren (LI)**

(72) Erfinder: **Malin, Cosmas**
**9493 Mauren (LI)**

(74) Vertreter: **Sutter, Kurt et al**
**E. Blum & Co. AG**
**Vorderberg 11**
**8044 Zürich (CH)**

(56) Entgegenhaltungen:
WO-A2-02/059251    US-A- 4 771 900
US-A- 5 226 715    US-A1- 2008 260 511

## Beschreibung

### Gebiet der Erfindung

Die Erfindung betrifft eine Lagerkassette für Laborobjekte, insbesondere für die Lagerung bei tiefen Temperaturen. Weiter betrifft die Erfindung auch eine Lageranlage mit einer derartigen Lagerkassette sowie die Kombination einer Lagerkassette mit mindestens einem Laborobjekt.

### Hintergrund

Lagerkassetten für Laborobjekte, welche eine Vielzahl von übereinander angeordneten Lagerstellen zur Aufnahme der Laborobjekte bilden, sind z.B. aus WO 02/059251 bekannt. Wenn derartige Lagerkassetten in grosser Anzahl benötigt werden, ist darauf zu achten, dass sie möglichst einfach und preiswert herstellbar sind.

US 5226715 beschreibt eine Lagerkassette, welche durch Schneiden und Biegen von "sheet metal" hergestellt wurde.

### Darstellung der Erfindung

Die vorliegende Erfindung stellt sich die Aufgabe, eine Lagerkassette, die eine Vielzahl von übereinander angeordneten Lagerstellen zur Aufnahme von Laborobjekten bildet, bereitzustellen, welche preiswert, robust und einfach herstellbar ist und in welcher die Laborobjekte sicher gehalten sind.

Diese Aufgabe wird von der Lagerkassette gemäss Anspruch 1 erfüllt.

Demgemäss besitzt die Lagerkassette eine Rückwand und zwei senkrecht zur Rückwand stehende Seitenwände. Dabei werden die Seitenwände und die Rückwand durch zueinander abgebogene Abschnitte eines einzigen Blechstücks gebildet. Eine solche Lagerkassette kann einfach hergestellt werden und ist, aufgrund der kleinen Zahl verwendeter Teile, robust.

Weiter kann an einem oberen und/oder unteren Ende der Lagerkassette ein Deckenteil bzw. Bodenteil angeordnet sein, der vorteilhaft ebenfalls von einem abgebogenen Abschnitt desselben Blechstücks gebildet wird. Hierdurch wird die Robustheit der Kassette weiter erhöht und der Preis gesenkt.

Die Lagerstellen der Lagerkassette werden von abgebogenen Winkeln des Blechstücks gebildet, auf welche die Laborobjekte aufgesetzt werden können. Somit können also auch die Winkel aus demselben Blech geformt werden wie die Rückwände.

Die Winkel an der Rückwand weisen an ihrer Vorderkante nach oben gebogene Rückhalteelemente auf, um die Laborobjekte rutschsicher zu halten.

Vorteilhaft sind im Blechstück Sollbiegestellen vorgesehen, um das ortsgenaue Biegen desselben zu erleichtern. Diese Sollbiegestellen werden vorzugsweise in Form von länglichen Löchern oder Schlitzen gebildet, welche im selben Arbeitsschritt wie das Zuschneiden des Blechstücks und somit in gut definierter räumlicher Lage angebracht werden können.

Die Erfindung betrifft auch eine Lageranlage mit mindestens einer Kammer und mindestens einer in der Kammer angeordneten Lagerkassette der oben beschriebenen Art.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:

Fig. 1 eine Ansicht einer Lageranlage, wobei die Aussenwände nur teilweise dargestellt sind,
Fig. 2 eine zweite Ansicht der Lageranlage von Fig. 1,
Fig. 3 eine Ansicht eines Dewargefässes,
Fig. 4 das Dewargefäss von Fig. 3 von oben, mit teilweise entfernter Wand,
Fig. 5 das Dewargefäss von Fig. 4 von der Seite,
Fig. 6 eine Lagerkassette,
Fig. 7 das obere Ende der Lagerkassette von Fig. 6,
Fig. 8 das untere Ende der Lagerkassette von Fig. 6,
Fig. 9 die Anordnung von Lagerkassetten in einem Dewargefäss,
Fig. 10 eine Kommissioniervorrichtung
Fig. 11 eine erste Ausführung eines Kassettenlifts,
Fig. 12 eine zweite Ausführung eines Kassettenlifts in heruntergefahrener Stellung,
Fig. 13 den Kassettenlift von Fig. 12 in mittlerer Stellung,
Fig. 14 den Kassettenlift von Fig. 12 in hochgefahrener Stellung,
Fig. 15 eine dritte Ausführung eines Kassettenlifts in heruntergefahrener Stellung,
Fig. 16 den Kassettenlift von Fig. 15 in mittlerer Stellung,
Fig. 17 den Kassettenlift von Fig. 15 in hochgefahrener Stellung,
Fig. 18 eine Seitenansicht des Kassettenlifts von Fig. 17,
Fig. 19 die Schaufel aus Fig. 10 im Detail,
Fig. 20 einen Teilschnitt durch eine zweite Ausführung eines Dewargefässes,
Fig. 21 eine Lagerkassette mit einer zweiten Ausführung des Zentrierelements,
Fig. 22 eine Seitenansicht eines vollständig eingesetzten Laborobjekts und
Fig. 23 eine Seitenansicht eines teilweise eingesetzten Laborobjekts.

Wege zur Ausführung der Erfindung

Lageranlage:

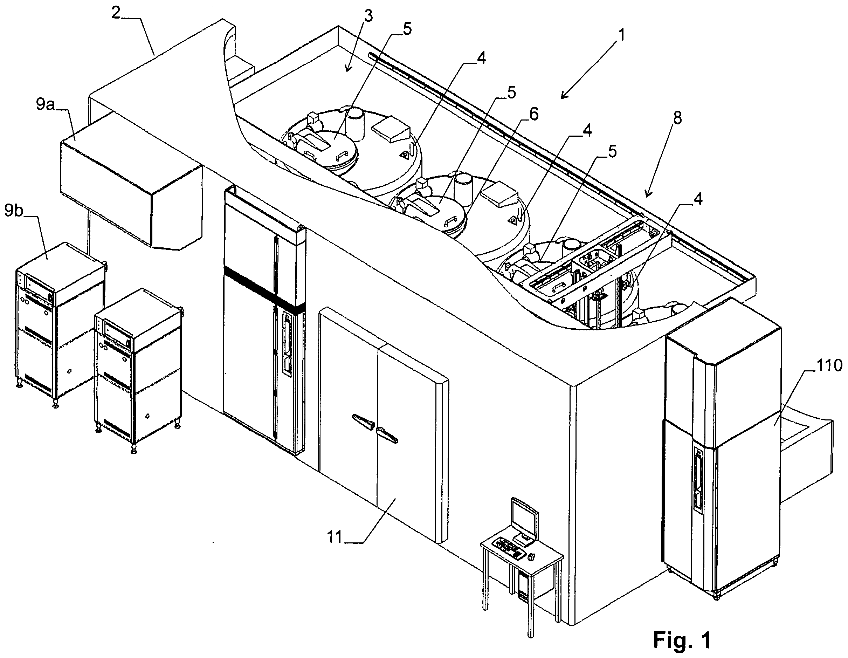

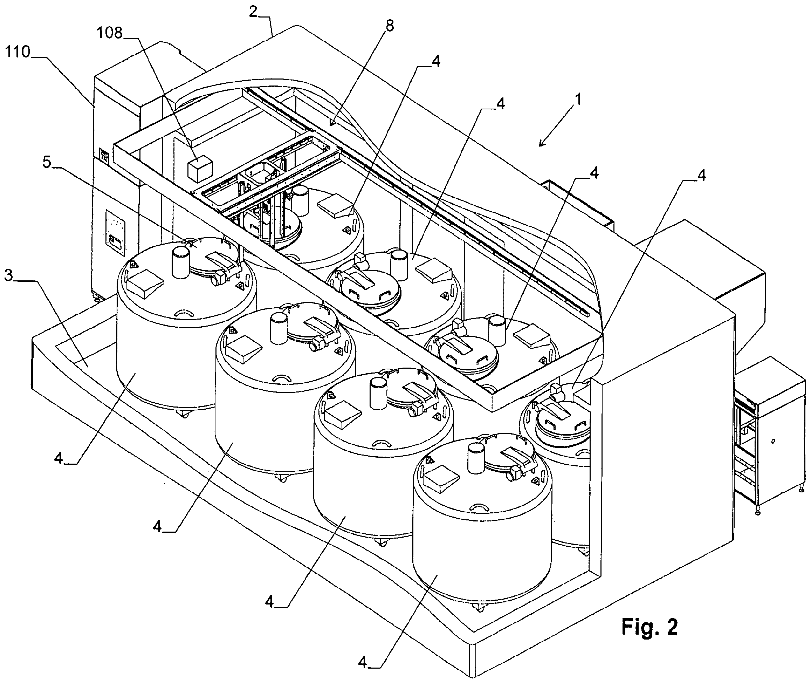

Fig. 1 und 2 zeigen eine Lageranlage 1 zur Langzeitlagerung von Proben bei sehr tiefen Temperaturen, insbesondere einer Lagertemperatur Ts unterhalb 160°C, typischerweise bei -196°C. Die Lageranlage ist dazu ausgestaltet, die Proben automatisch ein- und auszulagern und innerhalb der Lageranlage zwischen unterschiedlichen Lagerpositionen zu bewegen. Anlagen dieser Art haben hohe Anforderungen betreffend Sicherheit für die Proben, Zuverlässigkeit und Energieeffizienz zu erfüllen.

Die Proben sind beispielsweise in Probenröhrchen untergebracht, welche ihrerseits in Platten angeordnet sind. Jeweils mehrere dieser Probenplatten werden übereinander in einer Lagerkassette gelagert.

Die Lageranlage besitzt ein isoliertes Aussengehäuse 2, das eine Kammer 3 umschliesst. In der Kammer 3 ist mindestens ein Dewargefäss 4 angeordnet. Vorzugsweise sind mehrere solche Dewargefässe 4 vorgesehen. Jedes Dewargefäss 4 weist in bekannter Weise eine evakuierte, verspiegelte Isolationswand auf, welche geringe Wärmeleitung besitzt. Die Dewargefässe sind in der gezeigten Ausführung allseitig geschlossen und zum Zugriff auf ihren Innenraum ist jeweils ein Deckel 5 vorgesehen. Der Deckel bedeckt eine auf der Oberseite des Dewargefässes angeordnete Öffnung 6.

Die Kammer 3 ist vorzugsweise als Kühlkammer ausgestaltet. Tc der Kammer 3 liegt vorteilhaft unter 0°C, insbesondere unter -20°C oder -50°C. Dieses Absenken der Temperatur verhindert die Eisbildung in den Dewargefässen 4 bzw. an den Proben. Die Lagertemperatur Ts in den Dewargefässen 4 ist kleiner als die Kammertemperatur Tc und liegt vorzugsweise bei den erwähnten "sehr tiefen Temperaturen", d.h. typisch bei -196 °C.

Eine Kühlung der Kammer 3 ist allerdings nicht absolut notwendig. Die Kammer 3 kann z.B. auch lediglich eine definierte Atmosphäre (beispielsweise trockene Luft oder Stickstoffatmosphäre) enthalten, oder es kann sich um einen nicht besonders klimatisierten Lagerraum handeln.

Weiter ist in der Kammer 3 eine Kommissioniervorrichtung 8 angeordnet. Diese Kommissioniervorrichtung 8 verfügt über je eine Transportvorrichtung für die Lagerkassetten, die Probenplatten und die Probenröhrchen. Sie ist verfahrbar oberhalb der Dewargefässe 4 angeordnet. Wie aus Fig. 1 und 2 ersichtlich, ist vorteilhaft genau eine Kommissioniervorrichtung 8 vorgesehen, welche alle Dewargefässe bedient.

Die Lageranlage umfasst weiter eine erste Kühlvorrichtung 9a zum Erzeugen der Innentemperatur Ti in der Kammer 3 sowie eine zweite Kühlvorrichtung 9b zum Erzeugen der Lagertemperatur Ts in den Dewargefässen 4.

Die Kammer 3 ist über eine Türe 11 zugänglich, welche ausreichend gross für die Aufnahme der Dewargefässe 4 ist.

Dewargefässe:

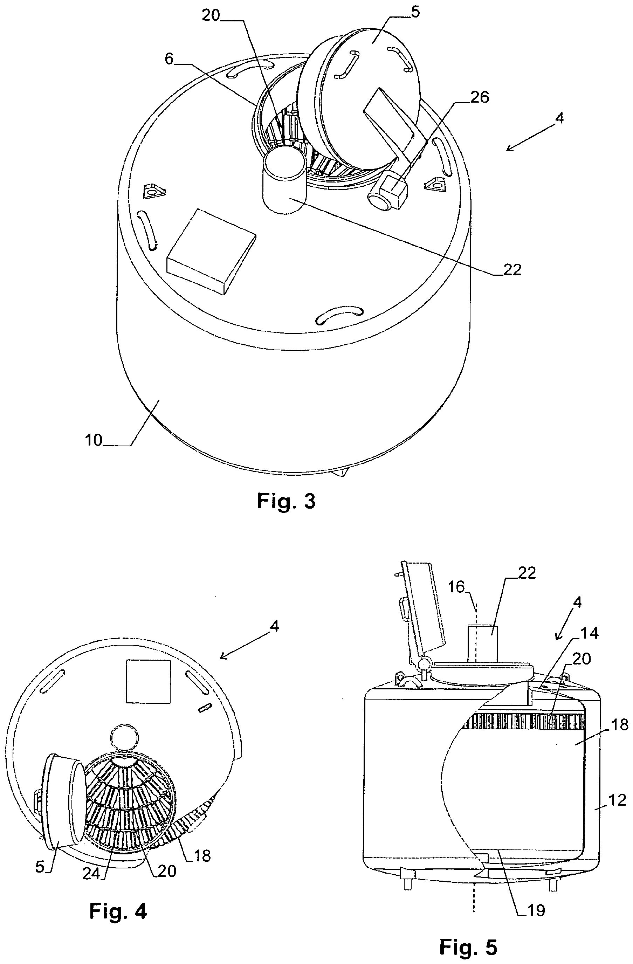

Eine erste Ausführung eines Dewargefässes 4 ist in Fig. 3 - 5 dargestellt. Es besitzt ein im Wesentlichen zylindrisches Gehäuse 10, in welchem die oben erwähnte Vakuumisolation 12 angebracht ist. Die Vakuumisolation 12 umschliesst einen Innenraum 14, der ein um eine vertikale Drehachse 16 drehbares Karussell 18 aufnimmt. Das Karussell 18 trägt auf einer Bodenplatte 19 eine Vielzahl von Lagerkassetten 20.

Ein Positionierantrieb 22 dient dazu, das Karussell 18 um die Drehachse 16 zu drehen und in definierte Positionen zu bringen.

Die Lagerkassetten 20 sind in mehreren konzentrischen Kreisen um die Drehachse 16 angeordnet, mittels vertikalen Wänden 24 radial positioniert und in vertikaler Richtung beweglich.

Die Türe 5 kann mit einem Türantrieb 26 automatisch geöffnet und geschlossen werden. Sie ist an der Oberseite des Dewargefässes 4 angeordnet und so positioniert und dimensioniert, dass bei geöffneter Türe 5 jede Lagerkassette 20, die mit dem Positionierantrieb 22 in den Bereich der Türöffnung gedreht wurde, von oben herausgezogen werden kann. Vorzugsweise ist der horizontale Durchmesser der Türöffnung jedoch kleiner als der halbe horizontale Durchmesser des Dewargefässes 4, so dass ein übermässiger Kälteverlust beim Öffnen der Türe 5 vermieden werden kann.

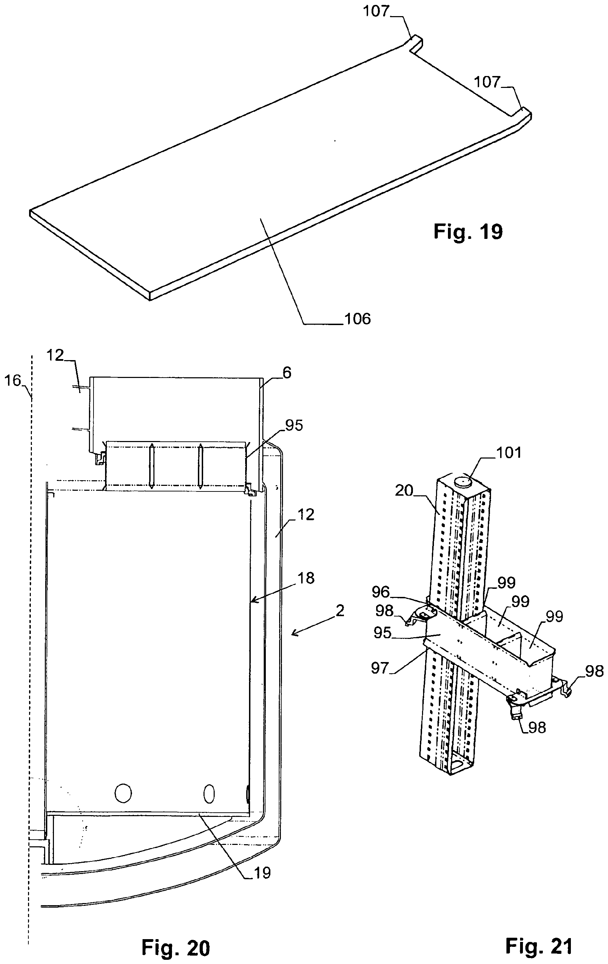

Eine zweite Ausführung eines Dewargefässes ist in Fig. 20 dargestellt. Ersichtlich ist in Fig. 20 insbesondere die Doppelwand mit der Vakuumisolation 12 sowie die vom Deckel 5 (nicht gezeigt) verschlossene Öffnung 6. Im Innenraum des Dewargefässes befindet sich wiederum ein Karussell 18, welches auf seiner Bodenplatte 19 eine Vielzahl von Lagerkassetten (nicht gezeigt) trägt.

In der Ausführung nach Fig. 20 ist in der Öffnung 6 ein Zentrierelement 95 angeordnet, dessen Aufgabe weiter unten erklärt wird.

Lagerkassetten:

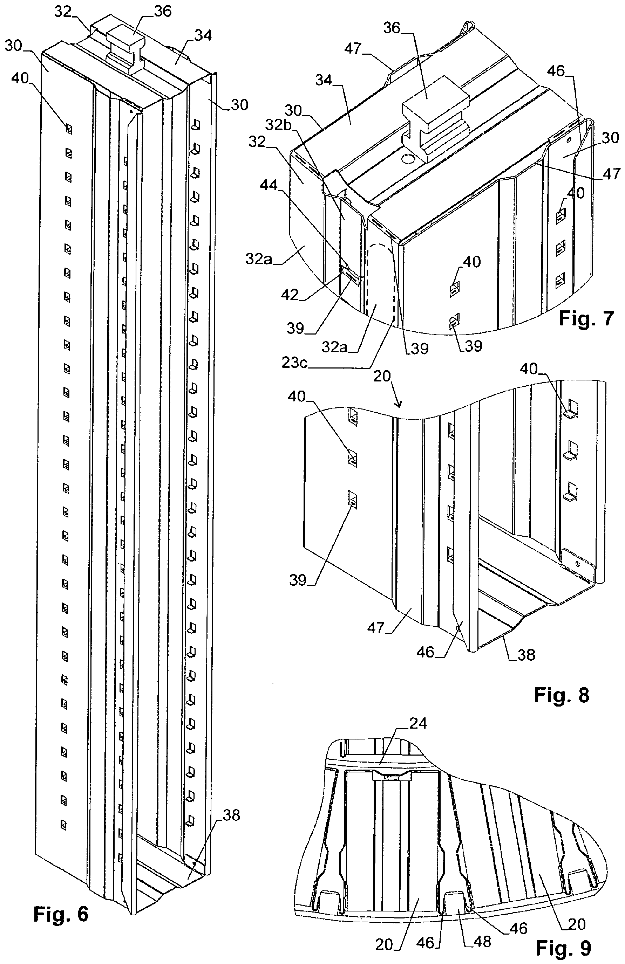

In Fig. 6 - 8 ist eine vorteilhafte Lagerkassette 20 dargestellt. Sie verfügt über zwei parallele, vertikale Seitenwände 30 und senkrecht dazu über eine vertikale Rückwand 32. Gegenüber der Rückwand 32 ist die Lagerkassette 20 offen, so dass auf die in der Lagerkassette 20 untergebrachten Probeplatten zugegriffen werden kann. Am oberen Ende der Lagerkassette 20 ist ein Deckenteil 34 angeordnet, an welchem die Seitenwände 30 und die Rückwand 32 sowie ein nach oben ragender Haltegriff 36 befestigt sind. Der Haltegriff 36 dient der weiter unten beschriebenen Kommissioniervorrichtung zum Ergreifen der Kassette. Am unteren Ende der Lagerkassette 20 ist ein Bodenteil 38 angeordnet, an welchem wiederum die Seitenwände 30 und die Rückwand 32 befestigt sind.

Die Lagerkassette bildet eine Vielzahl von übereinander angeordneten Lagerstellen, von denen jede eine Probeplatte aufnehmen kann. Sie sind so aufgebaut, dass sie eine hohe mechanische Genauigkeit über einen sehr weiten Temperaturbereich gewährleisten. Ferner verfügen sie über Zentrier- und Transportvorrichtungen, die eine hohe mechanische Positioniergenauigkeit bzw. den automatischen Transport ermöglichen.

Im dargestellten Ausführungsbeispiel wird jede Lagerstelle von mehreren Winkeln 40, 42 gebildet. Diese Winkel bilden Auflageelemente und stehen von den Seitenwänden 30 (Winkel 40) bzw. der Rückwand 32 (Winkel 42) nach innen ab und bilden seitliche und rückseitige Auflagen für die Probenplatten. Die Winkel 42 an der Rückwand 32 weisen an deren Vorderkante aufgebogene, d.h. nach oben gebogene, Rückhalteelemente 44 auf (siehe Fig. 7), die in die eingesetzte Probeplatte eingreifen, z.B. hinter eine Rückwand derselben, um so ein Herausrutschen derselben nach vorne zu verhindern.

Die Seitenwände 30 der Lagerkassetten 20 sind an der Vorderseite umgebogen und bilden so umgebogene Bereiche 46, mit welchen die Lagerkassette 20 im Dewargefäss 4 seitlich positioniert wird. Wie in Fig. 9 dargestellt, liegen die umgebogenen Bereiche 46 jeweils seitlich an einem ortsfest im Karussell 18 angeordneten Halteelement 48 an. Die umgebogenen Bereiche 46 erhöhen die Stabilität der Lagerkassetten. Aus dem gleichen Grund verläuft in jeder Seitenwand eine vertikale Sicke 47.

Wie insbesondere aus Fig. 7 ersichtlich, werden die Seitenwände 30 und die Rückwand 32 durch zueinander abgebogene Abschnitte eines einzigen Blechstücks aus Metall gebildet. Vorteilhaft werden auch der Deckenteil 34 und der Bodenteil 38 durch abgebogene Abschnitte desselben Blechstücks gebildet. Auch die Winkel 40, 42 können durch abgebogene Abschnitte des Blechteils gebildet werden. Damit wird die Herstellung der Lagerkassette vereinfacht und die Lagerkassette wird robust und temperaturbeständig.

Zwischen mindestens einem Teil der abgebogenen Abschnitte des Blechstücks sind Sollbiegestellen 39, insbesondere in Form von länglichen Löchern oder Schlitzen vorgesehen, welche ein ortsgenaues Biegen des Blechstücks bei der Herstellung vereinfachen.

Vorteilhaft wird der Umriss des Blechstücks mittels Laserbearbeitung zugeschnitten, und auch die Sollbiegestellen 39 werden im gleichen Arbeitsgang mit dem Laser erstellt, so dass eine hohe relative Positionsgenauigkeit gewährleistet ist.

Die dargestellte Lagerkassette eignet sich nicht nur zur Anwendung in der hier beschriebenen Lageranlage, sondern auch zur Verwendung zu anderen Zwecken, z.B. generell zur Lagerung von Laborobjekten (wie z.B. Mikrotiterplatten) innerhalb und ausserhalb von Klimaschränken.

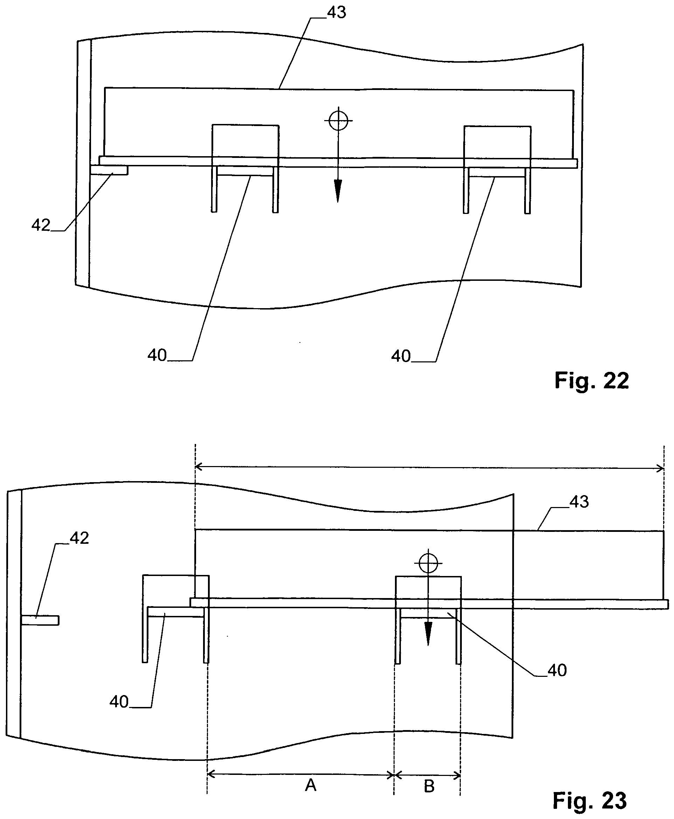

Fig. 22 zeigt ein Laborobjekt in Form einer Probeplatte 43, das auf den Winkeln 40, 42 ruht. Wie ersichtlich, sind an den Seitenwänden jeweils mindestens zwei beabstandete Winkel 40 angeordnet.

Fig. 23 zeigt die Probeplatte 43 in einer Position, in welcher ihr Schwerpunkt über dem vorderen (d.h. beschickungsseitigen) Winkel 40 ruht. Der Abstand A zwischen den Winkeln bzw. Auflageelementen 40 ist so gewählt, dass in dieser Position ein Kippen der Platte möglichst vermieden wird. Hierzu sind Abstand und Längen der Auflageelemente 40 so gewählt, dass

$$|L/2 - A| < B,$$

wobei L die Länge der Laborplatte bzw. der Lagerstelle (in Ausfahrrichtung der Schaufel), A der Abstand zwischen den zwei an der Seitenwand angeordneten Auflageelementen bzw. Winkeln 40 und B die Länge eines der Auflageelemente, insbesondere des vorderen (d.h. beschickungsseitigen) Auflageelements bzw. Winkels 40, ist. Die Notation |x| bezeichnet den Betrag von x.

Kommissioniervorrichtung:

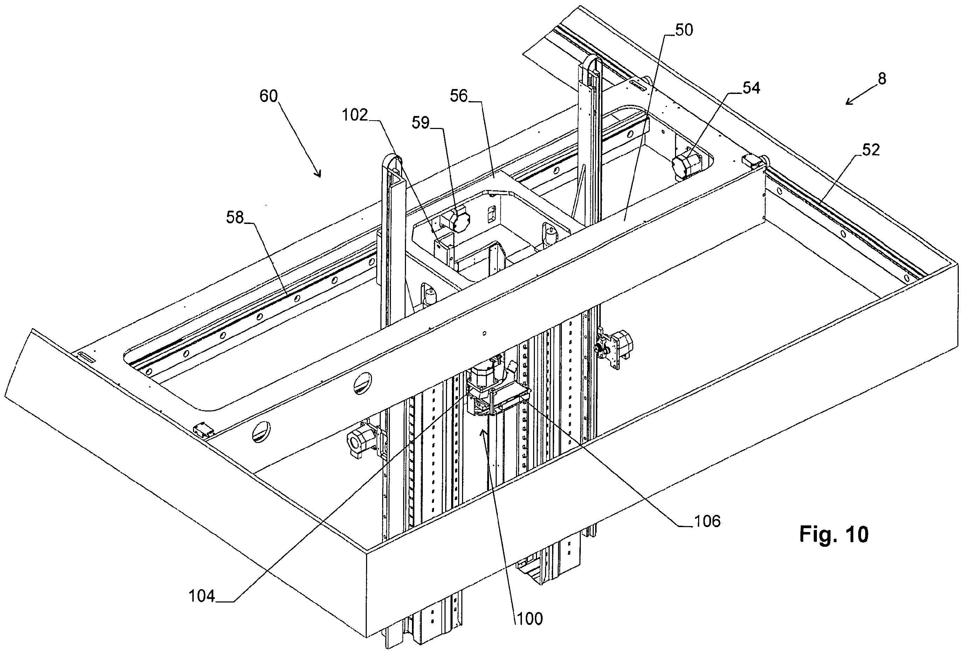

Die Kommissioniervorrichtung 8 ist in Fig. 10 genauer dargestellt. Sie besitzt einen Wagen 50, der horizontal entlang einer ortsfest in der Lageranlage 1 angeordneten ersten Schiene 52 verfahren werden kann, wozu ein erster Horizontalantrieb 54 vorgesehen ist. Im Wagen 50 ist ein Schlitten 56 angeordnet, der horizontal entlang einer zweiten Schiene 58, welche senkrecht zur ersten Schiene am Wagen 50 angeordnet ist, verfahren werden kann. Hierzu ist ein zweiter Horizontalantrieb 59 vorgesehen. Auf diese Weise ist der Schlitten 56 horizontal in allen Richtungen verfahrbar.

Am Schlitten 56 ist mindestens ein Kassettenlift 60 angeordnet, mit welchem Lagerkassetten in vertikaler Richtung aus den Dewargefässen 4 entnommen und wieder in diese eingesetzt werden können.

In der Ausführung nach Fig. 10 sind zwei solche Kassettenlifte 60 vorgesehen. Sie sind um 180° zueinander verdreht montiert. Diese Anordnung wurde gewählt, weil in der Ausführung nach Fig. 1 und 2 auch die Dewargefässe in zwei zueinander um 180° zueinander verdrehten Reihen angeordnet sind, so dass pro Reihe von Dewargefässen ein entsprechend orientierter Kassettenlift 60 zur Verfügung steht. Alternativ hierzu könnte auch nur ein Kassettenlift 60 vorgesehen sein, welcher um eine vertikale Achse um 180° verdreht werden kann. Oder die Dewargefässe 4 können alle gleich orientiert werden, in welchem Falle ein einziger, nicht drehbarer Kassettenlift ausreicht.

Der Aufbau des Kassettenlifts wird weiter unten beschrieben.

Am Schlitten 56 ist weiter eine Umschlagvorrichtung 100 vorgesehen. In der Ausführung nach Fig. 10 ist diese Umschlagvorrichtung 100 zwischen den beiden Kassettenliften 60 angeordnet.

Der Aufbau und die Funktion der Umschlagvorrichtung 100 entsprechen im Wesentlichen jenen der Umschlagvorrichtung gemäss WO 02/059251.

Die Umschlagvorrichtung 100 umfasst eine Vertikalführung 102, an welcher in Vertikalrichtung automatisch verfahrbar ein Umschlagschlitten 104 angeordnet ist. Am Umschlagschlitten 104 ist eine horizontal ausfahrbare Schaufel 106 vorgesehen. Die Schaufel 106 kann vorzugsweise um mindestens 180° um eine vertikale Achse verschwenkt werden, so dass sie in der Ausführung nach Fig. 10 wahlweise in die Lagerkassetten 20 der einander gegenüber liegenden Kassettenlifte 60 einfahren und dort eine Probeplatte aufnehmen oder ablegen kann. Weiter kann sie auch in Längsrichtung der Lageranlage 1 geschwenkt werden, um an einer endseitig in der Lageranlage 1 angeordneten Übergabestation 108 (siehe Fig. 2) eine Probeplatte abzulegen oder aufzunehmen.

Ausserhalb des Aussengehäuses kann am Ort der Übergabestation 108 ein Klimaschrank 110 vorgesehen sein, welcher in der Lage ist, Laborobjekte oder Lagerplatten mit der Übergabestation 108 auszutauschen.

Kassettenlift:

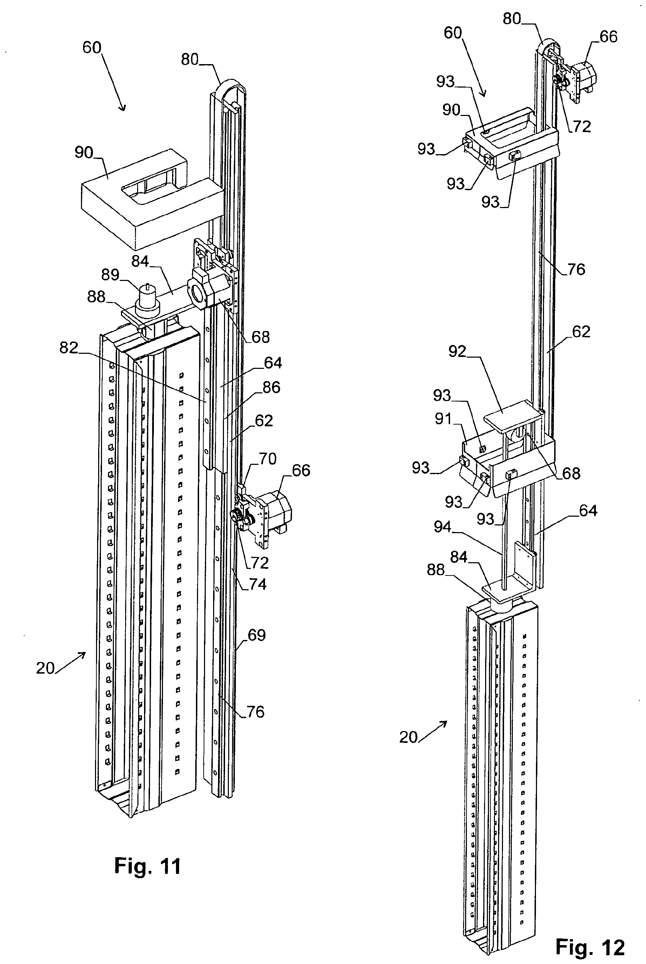

Fig. 11 zeigt eine ersten Ausführung eines Kassettenlifts. In dieser Ausführung besitzt jeder Kassettenlift 60 mehrere teleskopartig zueinander ausfahrbare Teleskopabschnitte 62, 64 sowie eine entsprechende Anzahl von Vertikalantrieben 66, 68.

Ein erster Teleskopabschnitt 62 ist stationär am Schlitten 56 befestigt. Am ersten Teleskopabschnitt 62 ist eine erste Vertikalschiene 69 angeordnet, auf der ein erster Vertikalantrieb 66 verschiebbar angeordnet ist. Der Vertikalantrieb 66 ist über eine erste Führung 70 mit der ersten Vertikalschiene 69 verbunden und greift mit einem Ritzel 72 in eine Zahnstange 74 am ersten Teleskopabschnitt 62 ein.

Am ersten Teleskopabschnitt 62 ist weiter eine zweite Vertikalschiene 76 angeordnet, an welcher der zweite Teleskopabschnitt 64 vertikal verfahrbar befestigt ist. Er ist über ein am oberen Ende des ersten Teleskopabschnitts 62 umgelenktes, flexibles, zugfestes tieftemperaturfestes Band oder eine Kette 80 mit dem ersten Vertikalantrieb 66 verbunden, so dass ein Absenken bzw. Hochfahren des ersten Vertikalantriebs 66 ein Hochfahren bzw. Absenken des zweiten Teleskopabschnitts 66 um dieselbe Höhe relativ zum ersten Teleskopabschnitt 62 bewirkt. Somit kann mit dem ersten Vertikalantrieb 64 der zweite Teleskopabschnitt 64 teleskopartig ausgefahren bzw. eingefahren werden.

Am zweiten Teleskopabschnitt 64 ist eine dritte Vertikalschiene 82 angeordnet, an welcher ein Arm 84 des Kassettenlifts 60 vertikal verfahrbar gelagert ist. Der zweite Vertikalantrieb 68 ist dazu ausgestaltet, den Arm 84 vertikal gegenüber dem zweiten Teleskopabschnitt 64 zu bewegen. In der in Fig. 11 gezeigten Ausführung greift der zweite Vertikalantrieb 68 hierzu mit einem Ritzel in eine Zahnstange 86 am zweiten Teleskopabschnitt 64 ein.

Am Arm 84 ist eine Greifervorrichtung 88 mit einem Greiferantrieb 89 angeordnet, mit welchem der Haltegriff 36 einer Lagerkassette 20 von oben ergriffen werden kann.

Auf fester Höhe am Schlitten 56 oder am ersten Teleskopabschnitt 62 oberhalb der Greifervorrichtung 88 ist mindestens ein Zentrierelement 90 vorgesehen, welches einen sich nach oben verjüngenden Sitz zur Aufnahme einer Lagerkassette 20 bildet, wenn die Lagerkassette mit dem Kassettenlift 60 bis in ihre oberste Stellung gefahren wird. Da gleichzeitig die Greifervorrichtung 88 seitlich etwas Spiel besitzt, definiert das Zentrierelement 90 die horizontale Position der angehobenen Lagerkassette 20 und ermöglicht es somit, die Lagerkassette horizontal exakt auszurichten.

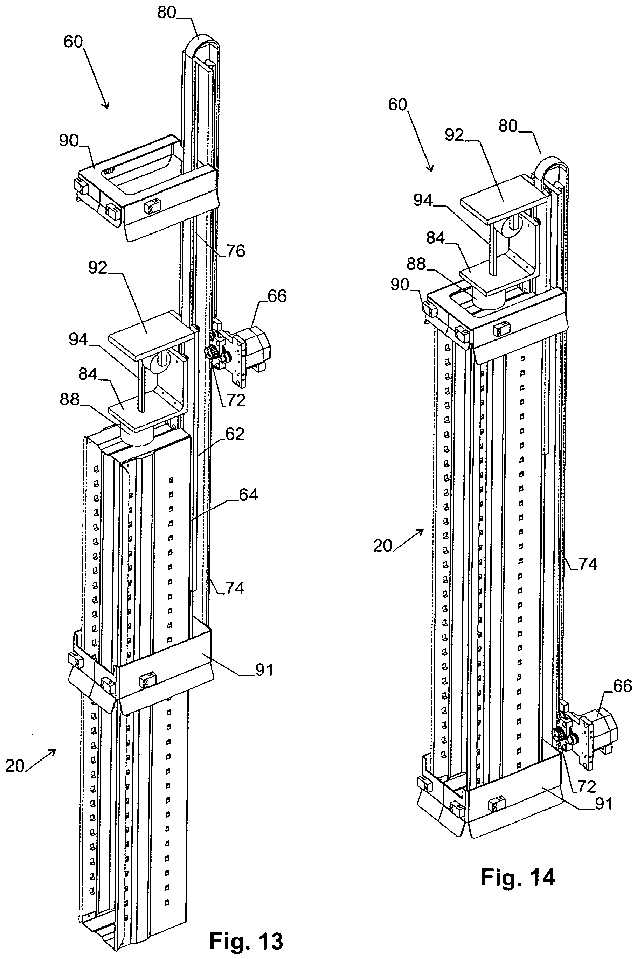

Fig. 12 - 14 zeigen eine zweite Ausführung eines Kassettenlifts 60. Sie entspricht konstruktiv jener nach Fig. 11, mit den folgenden Unterschieden:

- Der zweite Vertikalantrieb 68 ist nicht am Arm 84 angeordnet, sondern am oberen Ende 92 des zweiten Teleskopabschnitts 64. Er bildet eine Winde für eine Kette 94, an deren unteren Ende der Arm 84 befestigt ist. So kann der Arm 84 durch Auf- bzw. Abwickeln der Kette 94 hoch- bzw. heruntergefahren werden. Diese Lösung hat den Vorteil, dass der zweite Vertikalantrieb fest am zweiten Teleskopabschnitt 64 befestigt werden kann und nicht so weit nach unten in den Tieftemperaturbereich abgesenkt werden muss.

- Es sind zwei vertikal voneinander beabstandete Zentrierelemente 90, 91 vorgesehen. Ein oberes Zentrierelement 90 ist ungefähr gleich wie das Zentrierelement 90 der ersten Ausführung aufgebaut und bildet wieder einen sich nach oben verjüngenden Sitz für die Lagerkassette 20, während das untere Zentrierelement 91 einen sich nach oben verjüngenden Kragen bildet, in den die Lagerkassette 20 beim Hochfahren einfährt. Bei der hochgefahrenen Lagerkassette 20 kommt das obere Zentrierelement 90 im Bereich des oberen Endes der Lagerkassette 20 und das untere Zentrierelement 91 im Bereich des unteren Endes der Lagerkassette 20 zu liegen, so dass die hochgefahrene Lagerkassette 20 an beiden Enden horizontal geführt ist. Um eine Führung mit geringer Reibung zu gewährleisten, sind an den Zentrierelementen gefederte Rollenlager 93 vorgesehen (Fig. 12).

- Die Greifvorrichtung 88 ist als Elektromagnet ausgeführt.

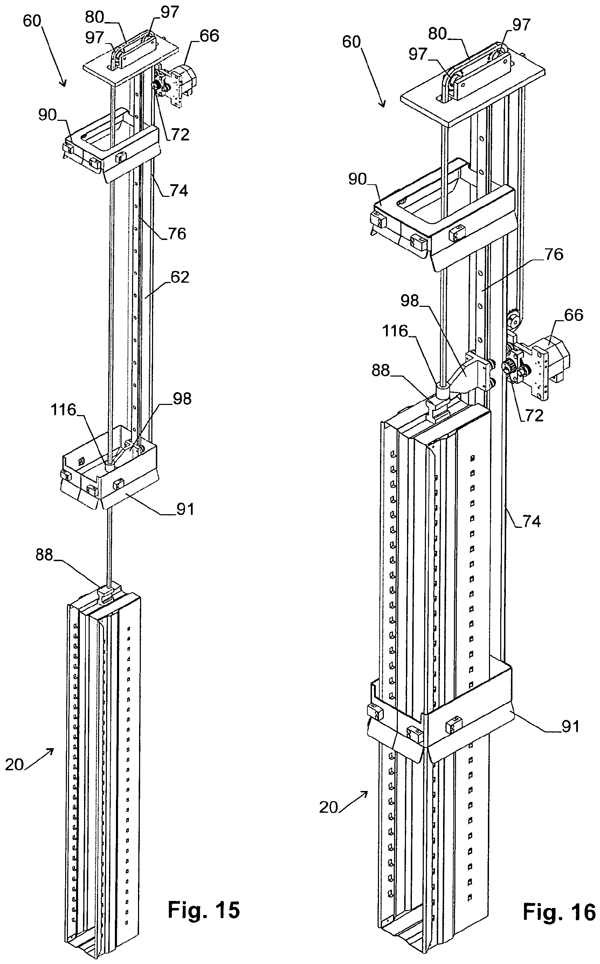

Fig. 15 - 18 zeigen eine dritte Ausführung eines Kassettenlifts 60. Sie entspricht konstruktiv jener nach Fig. 12 - 14, mit den im Folgenden beschriebenen Unterschieden.

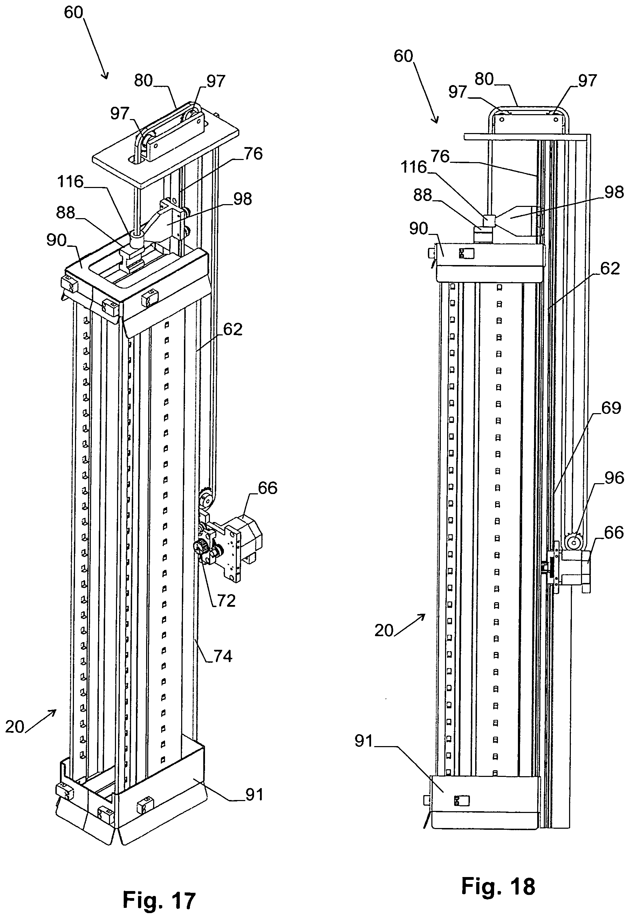

Die dritte Ausführung des Kassettenlifts basiert nicht auf einer teleskopartigen Anordnung von Elementen. Vielmehr bildet die Kette 80 zusammen mit Rollen 96, 97 einen Flaschenzug, der dazu dient, die Greifervorrichtung 88 in die Dewargefässe 4 abzusenken. Hierzu ist die Kette über mindestens eine untere und mindestens eine obere Rolle 96 bzw. 97 umgelenkt, vgl. Fig. 18. Eine der Rollen, vorteilhaft die untere Rolle 96, ist über den Vertikalantrieb 66 in vertikaler Richtung verschiebbar, während die andere Rolle sowie das obere Ende der Kette 80 vertikal stationär sind.

In der dargestellten Ausführung ist der Vertikalantrieb an der ersten Vertikalschiene 69 eines Schienenträgers 62 angeordnet (Fig. 18). Der Schienenträger 62 entspricht dem ersten Teleskopelement 62 der vorangehenden Ausführungen und ist fest am Schlitten 56 angeordnet.

Die am oberen Ende des Kassettenlifts 60 umgelenkte Kette 80 hängt vertikal nach unten und trägt an ihrem unteren Ende die Greifervorrichtung 88, welche, wie in der zweiten Ausführung des Kassettenlifts, von einem Elektromagneten gebildet wird, mit welchem die jeweilige Lagerkassette magnetisch festgehalten werden kann. (In Fig. 15 - 18 besitzt die Greifervorrichtung 88 exemplarisch die gleiche Form wie der Griff 36 aus Fig. 6, sie bildet jedoch ein vom Griff 36 separates Element. Bei Verwendung eines Elektromagneten als Greifervorrichtung 88 kann der Griff 36 entfallen, falls die Lagerkassette 20 zumindest an ihrem oberen Ende magnetisch festgehalten werden kann.)

Um das Ergreifen einer Lagerkassette 20 mittels Magnetkraft zu erleichtern, ist vorteilhaft an einem oberen Ende der Lagerkassette 20 eine Stahl- oder Eisenplatte 101 vorgesehen, wie sie in Fig. 20 dargestellt ist.

Um die Kette 80 seitlich etwas zu stabilisieren, ist ein Führungselement 98 vorgesehen, welches längsverschiebbar an einer zweiten Vertikalschiene 76 geführt ist. Die zweite Vertikalschiene 76 ist ebenfalls am Schienenträger 62 angeordnet. Das Führungselement 98 bildet eine seitliche Führung für die Kette 80, vorzugsweise eine Öse 116, durch welche die Kette 80 läuft. In der abgesenkten Stellung der Lagerkassette 20 (vgl. Fig. 16) befindet sich das Führungselement 98 bei einem Anschlag am unteren Ende der zweiten Vertikalschiene 76. Wird die Lagerkassette 20 hochgefahren, so schlägt die Öse 116 am Greifer 88 an und wird mitgenommen, vgl. Fig. 16 - 18.

Die Ausführung nach Fig. 15 - 18 hat u.a. auch den Vorteil, dass sie nur einen Vertikalantrieb 66 benötigt, der zudem relativ hoch oben am Lift angeordnet werden kann und nicht in die sehr kalten Bereiche der Lageranlage abgesenkt werden muss.

Die Verwendung eines Flaschenzugs ist zudem vorteilhaft, weil sie es erlaubt, den Vertikalhub des Motors und so die Bauhöhe zu reduzieren. Die Kette oder das Band 80 braucht jedoch nicht unbedingt in einem Flaschenzug angeordnet zu sein. Anstelle eines Flaschenzugs ist es z.B. auch möglich, das Band oder die Kette 80 auf eine angetriebene Rolle bzw. Winde aufzurollen bzw. von dieser abzurollen, wie in der in Fig. 12 - 14 dargestellten Ausführung für die Kette 94 dargestellt. Auch in diesem Fall kann die Greifervorrichtung 88 zum Ergreifen der Lagerkassetten 20 an einer Kette bzw. einem Band 80 in die Dewargefässe abgesenkt werden.

Zentrierelement im Dewargefäss

Zusätzlich oder alternativ zu den Zentrierelementen 90 und 91 kann auch ein Zentrierelement 95 am Dewargefäss 2 vorgesehen sein, wie es in Fig. 20 und 21 dargestellt ist. Vorteilhaft wird dieses Zentrierelement 95 in der Öffnung 6 angeordnet werden. Wie aus Fig. 21 ersichtlich, besitzt das Zentrierelement 95 einen sich nach oben aufweitenden oberen Kragen 96 sowie einen sich nach unten aufweitenden unteren Kragen 97, welche ein Einführen der Lagerkassette 20 von oben bzw. unten vereinfachen. Es ist über seitliche Füsse 98 in der Öffnung 6 in richtiger Position relativ zum Karussell 18 ausgerichtet und es bildet mindestens eine Führungsöffnung 99, in welcher die Lagerkassette bei der Durchführung horizontal geführt wird. Zwischen der Führungsöffnung 99 und einer Lagerkassette 20 bleibt ein möglichst geringes horizontales Spiel von z.B. maximal 5 mm.

In der Ausführung nach Fig. 20 und 21 besitzt das Zentrierelement mehrere Führungsöffnungen 99, welche in unterschiedlichen Abständen von der Drehachse 16 angeordnet sind. Die Abstände der Führungsöffnungen 99 zur Drehachse 16 entsprechen den Radien der Kreise der Lagerschächte im Karussell 18.

Bemerkungen:

An der Schaufel 106 (vgl. Fig. 10) ist vorzugsweise und wie in Fig. 19 gezeigt mindestens ein nach oben gerichtetes, insbesondere schräg nach oben gerichtetes, Halteelement 107, z.B. in der Form eines Fingers, angeordnet, und zwar an jenem Ende der Schaufel 106, mit welchem voran sie in die Lagerkassetten 20 eingefahren wird. In der Ausführung nach Fig. 19 sind zwei derartige Halteelemente 107 beabstandet voneinander angeordnet. Diese Halteelemente 107 dienen dazu, die Laborobjekte auf der Schaufel von hinten zu sichern, so dass sie nicht von der Schaufel fallen. Mit anderen Worten besitzt die Schaufel also mindestens ein Halteelement 107, mit welchem ein aufzunehmendes Laborobjekt hintergriffen werden kann.

Die Rückwand 32 der Lagerkassetten 20 ist so aufgebaut, dass die Halteelemente 107 Platz finden, um von unten her hinter ein in der Lagerkassette 20 gehaltenen Laborobjekt gebracht zu werden. Hierzu ist die Rückwand 32, wie in Fig. 7 dargestellt, in zwei vertikal verlaufenden Seitenbereichen 32a gegenüber ihrem Mittelbereich 32b zurückversetzt. Mit anderen Worten bildet also ein erster Bereich (Mittelbereich 32b) der Rückwand 32 einen Abstandshalter, gegenüber dem mindestens ein zweiter Bereich (in Fig. 7 die Seitenbereiche 32a) zurückversetzt ist, derart, dass die Halteelemente 107 hinter die in der Lagerkassette gehaltenen Laborobjekte in den zurückversetzten oder einen entsprechend ausgesparten Bereich einführbar sind, d.h. dass die Halteelemente 107 hinter dem in der Lagerkassette gehaltenen Laborobjekt Platz finden. (Der Begriff "hinter" bezeichnet dabei diejenige Seite der Laborobjekte, die der Rückwand 32 zugewandt ist.) In der Ausführung nach Fig. 19 ist der zweite Bereich 32a gegenüber dem ersten Bereich 32b zurückversetzt, der zweite Bereich 32a der Rückwand kann jedoch auch ausgespart sein, wie mit einer gestrichelten Linie 23c in Fig. 7 angedeutet.

In der obigen Beschreibung wird erwähnt, dass die Lageranlage 1 sowie die Lagerkassetten 20 zur Lagerung von Probenröhrchen dienen. Sie sind jedoch auch zur Lagerung von Proben in anderer Form geeignet, generell zur Lagerung von Laborobjekten, geeignet. Dabei kann es sich z.B. um biologische oder chemische Proben handeln. Eine typische Anwendung betrifft auch die Lagerung von Laborproben in Mikrotiterplatten, in welchem Fall die Probenplatten als Mikrotiterplatten ausgestaltet sind. Denkbar ist es auch, dass anstelle der Probenplatten Probenbehälter, z.B. Flaschen verwendet werden, welche jeweils nur eine Probe enthalten.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

**Patentansprüche**

1. Lagerkassette für Laborobjekte, welche eine Vielzahl von übereinander angeordneten Lagerstellen zur Aufnahme von Laborobjekten bildet, wobei die Lagerkassette umfasst:

   - eine Rückwand (32),
   - zwei senkrecht zur Rückwand stehende Seitenwände (30),

   wobei die Seitenwände (30) und die Rückwand (32) durch zueinander abgebogene Abschnitte eines einzigen Blechstücks gebildet werden,
   wobei die Lagerstellen von abgebogenen Winkeln (40, 42) des Blechstücks gebildet werden, auf welche die Laborobjekte aufsetzbar sind,
   wobei ein Teil (42) der Winkel an der Rückwand (32) angeordnet ist und wobei die Winkel (42) an der Rückwand an einer Vorderkante nach oben gebogene Rückhalteelemente (44) zum rutschsicheren Halten der Laborobjekte aufweisen.

2. Lagerkassette nach Anspruch 1, wobei an einem oberen und/oder unteren Ende der Lagerkassette ein Deckenteil (34) bzw. Bodenteil (38) angeordnet ist, der von einem abgebogenen Abschnitt des Blechstücks gebildet ist.

3. Lagerkassette nach einem der vorangehenden Ansprüche, dass im Blechstück Sollbiegestellen (39) in Form von länglichen Löchern oder Schlitzen angeordnet sind.

4. Lagerkassette nach einem der vorangehenden Ansprüche, wobei die Seitenwände (30) an einer Vorderseite der Lagerkassette umgebogene Bereiche (46) bilden.

5. Lagerkassette nach einem der vorangehenden Ansprüche, wobei eine Rückwand (32) der Lagerkassette (20) in einem ersten Bereich (32b) einen Abstandshalter (32b) für die Laborobjekte bildet, gegenüber dem mindestens ein zweiter Bereich (32a) der Rückwand ausgespart oder zurückversetzt ist.

6. Lagerkassette nach einem der vorangehenden Ansprüche, wobei an einem oberen Ende der Lagerkassette (20) eine Stahl- oder Eisenplatte (101) vorgesehen ist.

7. Lagerkassette nach einem der vorangehenden Ansprüche, wobei an jeder Seitenwand pro Lagerstelle mindestens zwei Auflageelemente, insbesondere Winkel (40), vorgesehen sind, wobei

$$|L/2 - A| < B,$$

erfüllt ist, wobei L eine Länge der der Lagerstelle, A ein Abstand der mindestens zwei Auflageelemente und B eine Länge eines der Auflageelemente ist.

8. Kombination einer Lagerkassette nach einem der vorangehenden Ansprüche und mindestens eines Laborobjekts, wobei an jeder Seitenwand pro Lagerstelle mindestens zwei Auflageelemente, insbesondere Winkel (40), vorgesehen sind, wobei

$$|L/2 - A| < B,$$

erfüllt ist, wobei L eine Länge der des Laborobjekts, A ein Abstand der mindestens zwei Auflageelemente und B eine Länge eines der Auflageelemente ist.

9. Lageranlage mit mindestens einer Kammer (3) und mindestens einer in der Kammer (3) angeordneten Lagerkassette nach einem der vorangehenden Ansprüche.

10. Lageranlage nach Anspruch 9, wobei die Lageranlage mindestens eine ausfahrbare Schaufel (106) zum Aufnehmen eines Laborobjekts aufweist, welche mindestens ein Haltelement (107) aufweist, mit welchem das Laborobjekt hintergreifbar ist, und wobei eine Rückwand (32) der Lagerkassette (20) in einem ersten Bereich (32b) einen Abstandshalter (32b) für die Laborobjekte bildet, gegenüber dem mindestens ein zweiter Bereich (32a) der Rückwand ausgespart oder zurückversetzt ist, wobei das Haltelement zum Aufnehmen oder Ablegen eines Laborobjekts in den ausgesparten bzw. zurückversetzten Bereich einführbar ist.

**Claims**

1. Storage cassette for laboratory objects, which forms a plurality of storage sites arranged one above the other to accommodate laboratory objects, wherein the storage cassette comprises:

   - A back wall (32),
   - Two side walls (30) standing perpendicular to the back wall,

   wherein the side walls (30) and the back wall (32) are formed by sections of a single piece of sheet metal bent towards one another,
   wherein the storage sites are formed by bent angle brackets (40, 42) of the piece of sheet metal, on which the laboratory objects can be placed,
   wherein part (42) of the angle brackets are arranged on the back wall (32) and wherein the angle brackets (42) on the back wall have on a front edge retention elements (44) bent upwards to hold the laboratory objects secure against slipping.

2. Storage cassette according to claim 1, wherein a top part (34) or base part (38) is arranged on an upper and/or lower end of the storage cassette, which part is formed by a bent section of the piece of sheet metal.

3. Storage cassette according to one of the preceding claims, wherein predetermined bending locations (39) are arranged in the piece of sheet metal in the form of elongated holes or slots.

4. Storage cassette according to one of the preceding claims, wherein the side walls (30) form bent over regions (46) on a front side of the storage cassette.

5. Storage cassette according to one of the preceding claims, wherein a back wall (32) of the storage cassette (20) in a first region (32b) forms a spacer (32b) for the laboratory objects, in respect to which at least one second region (32a) of the back wall is recessed or set back.

6. Storage cassette according to one of the preceding claims, wherein a steel or iron plate (101) is provided at an upper end of the storage cassette (20).

7. Storage cassette according to one of the preceding claims, wherein on each side wall for each storage site at least two support elements, in particular angle brackets (40), are provided, wherein

$$\left| L/2 - A \right| \; < \; B,$$

is satisfied, wherein L is a length of the storage site, A is a distance of the at least two support elements and B is a length of one of the support elements.

8. Combination of a storage cassette according to one of the preceding claims and at least one laboratory object, wherein on each side wall for each storage site at least two support elements, in particular angle brackets (40) are provided, wherein

$$\left| L/2 - A \right| \; < \; B,$$

is satisfied, wherein L is a length of the laboratory object, A is a distance of the at least two support elements and B is a length of one of the support elements.

9. Storage arrangement with at least one chamber (3) and at least one storage cassette according to one of the preceding claims arranged in the chamber (3).

10. Storage arrangement according to claim 9, wherein the storage arrangement has at least one extendible scoop (106) for taking up a laboratory object, which has at least one holder element (107) with which the laboratory object can be seized from behind, and wherein a back wall (32) of the storage cassette (20) in a first region (32b) forms a spacer (32b) for the laboratory objects, in respect to which at least one second region (32a) of the back wall is recessed or set back, wherein the holder element can be inserted into the recessed or set back region to take up or deposit a laboratory object.

**Revendications**

1. Cassette de stockage pour objets de laboratoire, qui forme une pluralité de sites de stockage disposés les uns au-dessus des autres pour recevoir des objets de laboratoire, la cassette de stockage comprenant:

   - Une paroi arrière (32),
   - Deux parois latérales (30) perpendiculaires à la paroi arrière,

les parois latérales (30) et la paroi arrière (32) étant formées par des sections d'une seule pièce de tôle pliée l'une vers l'autre,
les sites de stockage étant formés par des équerres de fixation (40, 42) de la pièce de tôle, sur lesquelles les objets de laboratoire peuvent être placés,
une partie (42) des équerres de fixation étant disposées sur la paroi arrière (32) et les équerres de fixation (42) sur la paroi arrière comportant, sur un bord avant, des éléments de retenue (44) pliés vers le haut pour maintenir les objets de laboratoire à l'abri du glissement.

2. Cassette de stockage selon la revendication 1, une partie supérieure (34) ou une partie inférieure (38) étant disposée sur une extrémité supérieure et/ou inférieure de la cassette de stockage, laquelle partie étant formée par une section pliée de la pièce de tôle.

3. Cassette de stockage selon l'une des revendications précédentes, des emplacements de pliage prédéterminés (39) étant disposés dans la pièce de tôle sous la forme de trous ou de fentes oblongs.

4. Cassette de stockage selon l'une des revendications précédentes, les parois latérales (30) formant des zones coudées (46) sur une face avant de la cassette de stockage.

5. Cassette de stockage selon l'une des revendications précédentes, une paroi arrière (32) de la cassette de stockage (20) dans une première zone (32b) formant un espaceur (32b) pour les objets de laboratoire, par rapport auquel au moins une deuxième zone (32a) de la paroi arrière est encastrée ou en retrait.

6. Cassette de stockage selon l'une des revendications précédentes, une plaque en acier ou en fer (101) étant prévue à une extrémité supérieure de la cassette de stockage (20).

7. Cassette de stockage selon l'une des revendications précédentes, au moins deux éléments de support, en particulier des équerres de fixation (40), étant prévus sur chaque paroi latérale de chaque site de stockage, dans laquelle

$$\left| L/2 - A \right| \; < \; B,$$

L étant une longueur du site de stockage, A étant une distance des au moins deux éléments de support et B étant une longueur d'un des éléments de support.

8. Combinaison d'une cassette de stockage selon l'une des revendications précédentes et d'au moins un objet de laboratoire, au moins deux éléments de support, en particulier des équerres de fixation (40), étant prévus sur chaque paroi latérale de chaque site de stockage, dans laquelle

$$\left| L/2 - A \right| \; < \; B,$$

L étant une longueur de l'objet de laboratoire, A étant une distance des au moins deux éléments de support et B étant une longueur d'un des éléments de support.

9. Agencement de stockage avec au moins une chambre (3) et au moins une cassette de stockage selon l'une des revendications précédentes disposée dans la chambre (3).

10. Agencement de stockage selon la revendication 9, l'agencement de stockage présentant au moins une pelle extensible (106) pour recevoir un objet de laboratoire, qui présente au moins un élément de support (107) avec lequel l'objet de laboratoire peut être saisi par derrière, et une paroi arrière (32) de la cassette de stockage (20) dans une première région (32b) formant un espaceur (32b) pour les objets de laboratoire, par rapport auquel au moins une deuxième région (32a) de la paroi arrière est encastrée ou en retrait, l'élément de support pouvant être inséré dans la région encastrée ou en retrait pour prendre ou déposer un objet de laboratoire.

Fig. 1

Fig. 2

**Fig. 3**

**Fig. 4**

**Fig. 5**

**Fig. 6**

**Fig. 7**

**Fig. 8**

**Fig. 9**

Fig. 10

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

43

42

40                    40

**Fig. 22**

42

43

40

40

A          B

**Fig. 23**

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02059251 A
- US 5226715 A